# EUROPEAN PATENT SPECIFICATION

(11) **EP 3 546 293 B1**
(45) Date of publication and mention of the grant of the patent: **10.03.2021**
(21) Application number: 19166076.0
(22) Date of filing: 29.03.2019
(51) Int. Cl.: B60R 1/00

(54) **SURROUNDING MONITORING DEVICE**
UMGEBUNGSÜBERWACHUNGSVORRICHTUNG
DISPOSITIF DE SURVEILLANCE DES ALENTOURS

(30) Priority: 29.03.2018 JP 2018063507
(43) Date of publication of application: 02.10.2019
(73) Proprietor: AISIN SEIKI KABUSHIKI KAISHA, Kariya-shi Aichi-ken, 448-8650 (JP)
(72) Inventor: SETO, Yuki, KARIYA-SHI, AICHI-KEN, 448-8650 (JP)
(74) Representative: Cabinet Beau de Loménie

(56) References cited:
- DE-A1-102008 023 851
- JP-A- 2011 087 319
- JP-A- 2017 123 627
- JP-B2- 3 125 969
- US-A1- 2005 270 500

## Description

### TECHNICAL FIELD

This disclosure relates to a surrounding monitoring device.

### BACKGROUND DISCUSSION

JP 2017-123627A (Reference 1) discloses a technique of displaying images produced (outputted) by imaging devices installed in a vehicle to a driver or the like after performing image processing such as viewpoint conversion and synthesis..

However, in the related art, a center of an imaging range of the imaging device installed in the vehicle deviates from a center of an image displayed to the driver or the like. Accordingly, distortion occurs in the display image due to viewpoint conversion, which might bring a sense of discomfort to the driver or the like who views the display image.

Other techniques for displaying to a driver images outputted by imaging devices installed in a vehicle are disclosed by documents JP 2011 087319, that corresponds to the preamble of claim 1, JP 3 125969 and US 2005/270500.

### SUMMARY

As an example, a vehicle comprising a surrounding monitoring device according to an embodiment of this disclosure is defined by claim 1. Therefore, in the surrounding monitoring device of the vehicle according to the embodiment, it is possible to produce produced images suitable for generating the display image with a little distortion.

As an example, the surrounding monitoring device may further include a movement control unit that moves orientations of the plurality of imaging devices to directions in which the centerlines of the respective lenses of the plurality of imaging devices intersect at a viewpoint after movement when the viewpoint moves. Therefore, according to the surrounding monitoring device according to the embodiment, for example, it is possible to generate a display image which changes a position of an imaginary viewpoint P.

As an example, the surrounding monitoring device may further include a plurality of imaging devices attached to the vehicle in order to generate the display image corresponding to a first viewpoint, and a plurality of imaging devices attached to a vehicle in order to generate another display image corresponding to a second viewpoint. The centerlines of the respective lenses of the plurality of imaging devices associated with the first viewpoint may intersect at the first viewpoint. The centerlines of the respective lenses of the plurality of imaging devices associated with the second viewpoint may intersect at the second viewpoint. Therefore, according to the surrounding monitoring device according to the embodiment, for example, even though the imaging devices are not moved, it is possible to generate the plurality of display images corresponding to the plurality of viewpoints respectively.

As an example, the surrounding monitoring device may further include an image processing unit that combines (or synthesizes) a plurality of images produced by the plurality of imaging devices associated with the viewpoint to generate the display image viewed from the viewpoint, and the display control unit may cause the generated display image to be displayed on a display device. Therefore, according to the surrounding monitoring device according to the embodiment, for example, by displaying a situation in a plurality of directions surrounding the vehicle on the display image with a little distortion, a situation in the plurality of directions can be displayed on one screen while reducing a sense of discomfort of a user on the display image.

In the surrounding monitoring device as an example, the image processing unit may recognize a predetermined object from the plurality of images produced by the plurality of imaging devices or the display image, and the display control unit may superimpose a result of recognition of the object by the image processing unit on the display image and may cause the result to be displayed on the display device. Therefore, according to the surrounding monitoring device according to the embodiment, for example, when the recognition result of the predetermined object included in the produced images is displayed, it is possible to reduce a sense of discomfort of the user on the display of the recognition result and occurrence of misunderstanding.

### BRIEF DESCRIPTION OF THE DRAWINGS

The foregoing and additional features and characteristics of this disclosure will become more apparent from the following detailed description considered with the reference to the accompanying drawings, wherein:
Fig. 1 illustrates an example of installation positions of imaging devices according to a first embodiment;
Fig. 2 shows an example of functions of an information processing device according to the first embodiment;
Fig. 3 illustrates an example of imaging ranges of the imaging devices and a display range of a display image according to the first embodiment;
Fig. 4 illustrates an example of image processing according to the first embodiment;
Fig. 5 illustrates an example of an installation position of a display device according to the first embodiment;
Fig. 6 illustrates an example of the display image according to the first embodiment;
Fig. 7 shows an example of functions of an information processing device according to a second embodiment;
Fig. 8 illustrates an example of movement of an imaginary viewpoint according to the second embodiment;
Fig. 9 illustrates an example of installation positions of imaging devices according to a third embodiment;
Fig. 10 shows an example of functions of an information processing device according to the third embodiment;
Fig. 11 illustrates an example of installation positions of imaging devices according to the related art;
Fig. 12 illustrates an example of imaging ranges of the imaging devices and a display range of a display image according to the related art; and
Fig. 13 illustrates an example of the display image according to the related art.

### DETAILED DESCRIPTION

### (First Embodiment)

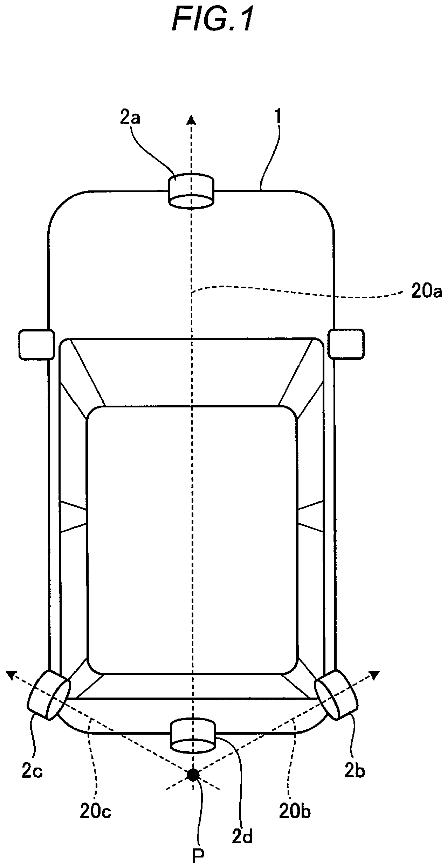

Fig. 1 illustrates an example of installation positions of imaging devices 2a to 2d according to a first embodiment. The imaging devices 2a to 2d are cameras which produce images of the surroundings of a vehicle 1.

More specifically, the imaging device 2a is a front camera which produces images at a front of the vehicle 1, the imaging device 2b is a right side camera which produces images at a right side of the vehicle 1, the imaging device 2c is a left side camera which produces images at a left side of the vehicle 1, and the imaging device 2d is a back camera (rear camera) which produces images at a back of the vehicle 1.

The installation positions and installation angles of the imaging devices 2a to 2c are determined such that centerlines 20a to 20c of lenses of the imaging devices 2a to 2c intersect at a point P. Hereinafter, the imaging devices 2a to 2c are referred to as an imaging device 2 unless particularly distinguished. The centerlines 20a to 20c are referred to as a centerline 20 unless particularly distinguished. The centerline 20 is also a centerline of an imaging range of the imaging device 2.

The point P is an imaginary viewpoint of a display image generated from images produced (outputted) by the imaging devices 2a to 2c. Hereinafter, the point P is referred to as an imaginary viewpoint P. The imaginary viewpoint P is a position that is a viewpoint of a user when the user views the display image. In this embodiment, the position of the imaginary viewpoint P is determined in advance, and the imaging devices 2a to 2c are attached to the vehicle 1 in order to generate the display image corresponding to the imaginary viewpoint P.

The display image displays a range corresponding to a visual field of the user when the user views the surroundings of the vehicle from the position of the imaginary viewpoint P. Details of the display image are described below. The user is, for example, a driver of the vehicle 1.

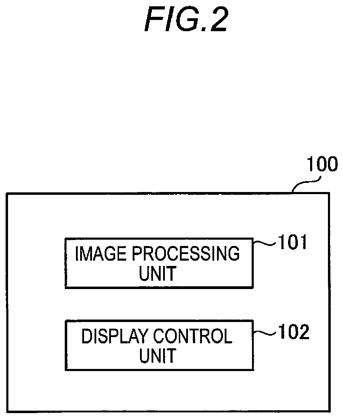

Fig. 2 shows an example of functions of an information processing device 100 according to this embodiment. The information processing device 100 is, for example, an electronic control unit (ECU) loaded on the vehicle 1, and manages the imaging devices 2a to 2d. The information processing device 100 of this embodiment includes an image processing unit 101 and a display control unit 102.

The image processing unit 101 performs image processing such as magnification and synthesis (or combination) of a plurality of images produced by the imaging devices 2a to 2d associated with the imaginary viewpoint P to generate the display image viewed from the imaginary viewpoint P. The display control unit 102 outputs the display image generated by the image processing unit 101 to a display device to be described below.

In this embodiment, the imaging devices 2a to 2c may be used as a surrounding monitoring device, or both of the imaging devices 2a to 2c and the information processing device 100 may be used as a surrounding monitoring device.

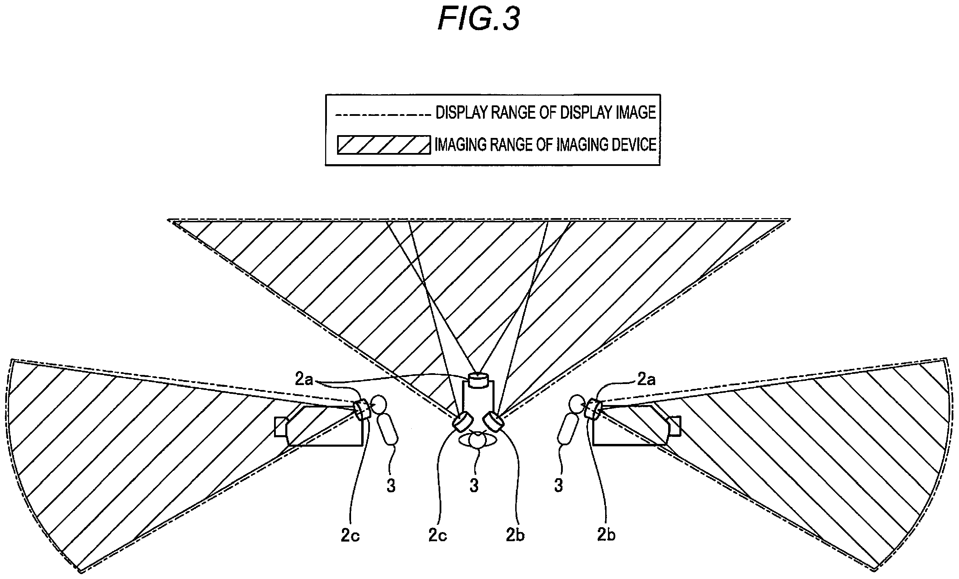

Next, imaging ranges of the imaging devices 2a to 2c are described in more details. Fig. 3 illustrates an example of imaging ranges of the imaging devices 2a to 2c and a display range of the display image according to this embodiment. An alternate long and short dash line illustrated in Fig. 3 represents the display range of the display image displayed to a user 3. "The display range of the display image" is also referred to as "a visual field of the user 3 when the user 3 is located at the imaginary viewpoint P" or "a visual field of the display image". In addition, the hatched line illustrated in Fig. 3 represents the imaging ranges of the imaging devices 2a to 2c. "The imaging ranges of the imaging devices 2a to 2c" are also referred to as "visual fields of the imaging devices 2a to 2c".

A diagram in a middle of Fig. 3 illustrates the imaging ranges of the imaging devices 2a to 2c and the display range of the display image when the vehicle 1 is viewed from above. A diagram on a right side and a diagram on a left side of Fig. 3 illustrate the imaging ranges of the imaging devices 2a to 2c and the display range of the display image when the vehicle 1 is viewed from the right side or the left side, respectively. A position of the user 3 in Fig. 3 indicates the position of the imaginary viewpoint P.

As illustrated in Fig. 3, a center of the imaging range of each of the imaging devices 2a to 2c is located on an extension line of a center of the display range of the display image. For example, regarding imaging of the front of the vehicle 1, the center of the imaging range of the imaging device 2a, which is the front camera, is located on the extension line of the center of the display range of the display image. Regarding imaging of the left and right sides of the vehicle 1, the center of the imaging range of the imaging device 2b, which is the right side camera, or the center of the imaging range of the imaging device 2c, which is the left side camera, is also located on the extension line of the center of the display range of the display image.

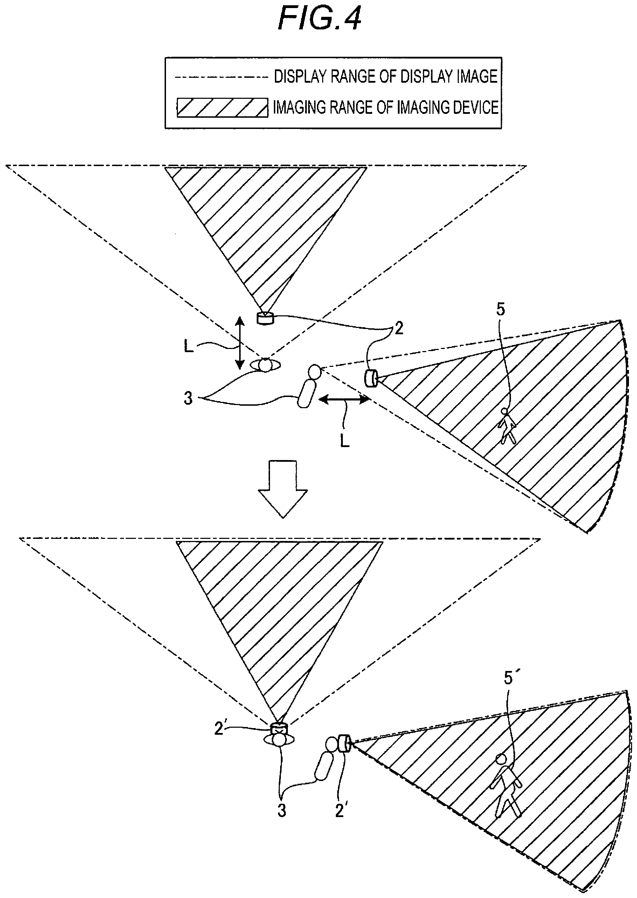

Fig. 4 illustrates an example of image processing according to this embodiment. The imaging device 2 illustrated in Fig. 4 is any one of the imaging devices 2a to 2c. An upper part of Fig. 4 illustrates diagrams of the imaging range of the imaging device 2 and the display range of the display image as viewed from above and a side.

As also illustrated in Fig. 1, there is a distance between the positions where the imaging devices 2a to 2c are installed and the imaginary viewpoint P (the position of the user 3 in Fig. 4). This distance is defined as distance L. As illustrated in a lower part of Fig. 4, the image processing unit 101 of the information processing device 100 makes an imaging range of the produced image after magnification coincide with the display range of the display image (the visual field viewed by the user 3 from the imaginary viewpoint P) by magnifying the produced image just by the distance L. An imaging range of a produced image of an imaging device 2' illustrated in Fig. 4 indicates an imaging range when the imaging device 2' produces an image from the position of the imaginary viewpoint P. By magnifying the produced image, the image processing unit 101 sets a size of a subject included in the image produced by the imaging device 2 to the same size as that when the imaging device 2' produces an image from the position of the imaginary viewpoint P.

Since the center of the imaging range of the imaging device 2 is located in the center of the display range of the display image, it is possible to fit the visual field of the user 3 by magnifying the image just by the distance L without significant viewpoint conversion. Therefore, distortion hardly occurs in an object (subject) included in the produced image. For example, in the image after magnification in Fig. 4, a person 5 included in the produced image becomes larger as illustrated as a person 5', but a shape is the same as before magnification, and no distortion occurs.

In addition to the magnification processing of the produced image, the image processing unit 101 combines (or synthesizes) the produced images of the imaging devices 2a to 2c into a series of display images which display the left side, the front, and the right side of the vehicle 1. Since the imaging devices 2a to 2c are installed as the centerlines 20a to 20c at the imaginary viewpoint P, the image processing unit 101 does not need processing of significant viewpoint conversion when the produced images of the imaging devices 2a to 2c are combined. Therefore, the image processing unit 101 can reduce distortion of the display image.

The above magnification processing and synthesis processing are examples of the image processing, and the image processing unit 101 may further perform other image processing. The image processing unit 101 also performs image processing such as magnification on a produced image which the imaging device 2d, which is the back camera, produces at the back of the vehicle 1.

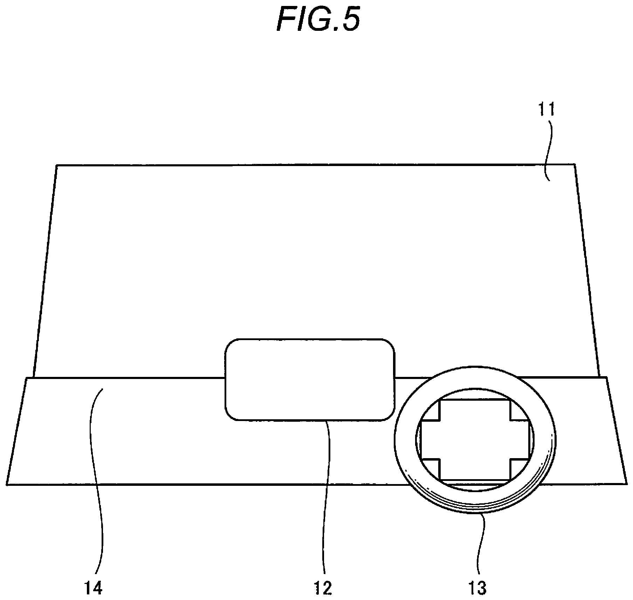

Next, the display image is described. Fig.5 illustrates an example of an installation position of a display device 12 according to this embodiment. As an example, the display device 12 is installed near a middle of a dashboard 14 under a windshield of the vehicle 1. The display device 12 may be at a position that is easily visible from a driver who operates a handle 13, but the installation position is not limited thereto. The display device 12 is, for example, a liquid crystal display.

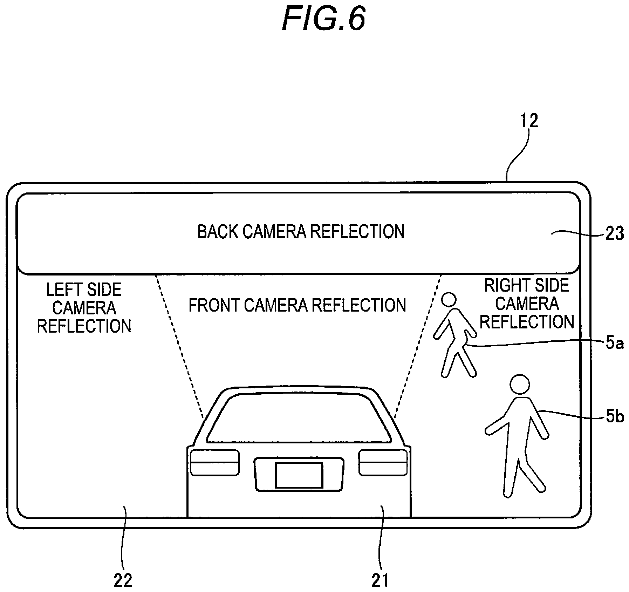

Fig. 6 is an example of the display image according to this embodiment. The display control unit 102 of the information processing device 100 displays the display image generated by the image processing of the image processing unit 101 to the display device 12. In more details, the display control unit 102 displays an image 21 illustrating a back surface of the vehicle 1, a first display image 22 in which the produced images of the imaging devices 2a to 2c are combined (synthesized), and a second display image 23 generated by magnification processing or the like from the image produced by the imaging device 2d which is the back camera.

The first display image 22 includes a front camera reflection (or image) obtained by magnifying the image produced by the imaging device 2a, a right side camera reflection (or image) obtained by magnifying the image produced by the imaging device 2b, and a left side camera reflection (or image) obtained by magnifying the image produced by the imaging device 2c, and is synthesized (obtained by combination) such that the images are connected at a boundary of each reflection/image. The first display image 22 is also referred to as an image which displays the visual field of the user 3 when the user 3 views the surroundings of the vehicle 1 from the position of the imaginary viewpoint P. Since shapes of persons 5a, 5b included in the first display image 22 are not distorted, the first display image 22 can grasp a situation of the surroundings of the vehicle 1 without bringing a sense of discomfort to the user 3.

The first display image 22 and the second display image 23 illustrated in Fig. 6 are an example of the display image, and for example, the display control unit 102 may individually display the left side camera reflection, the front camera reflection, and the right side camera reflection without synthesis.

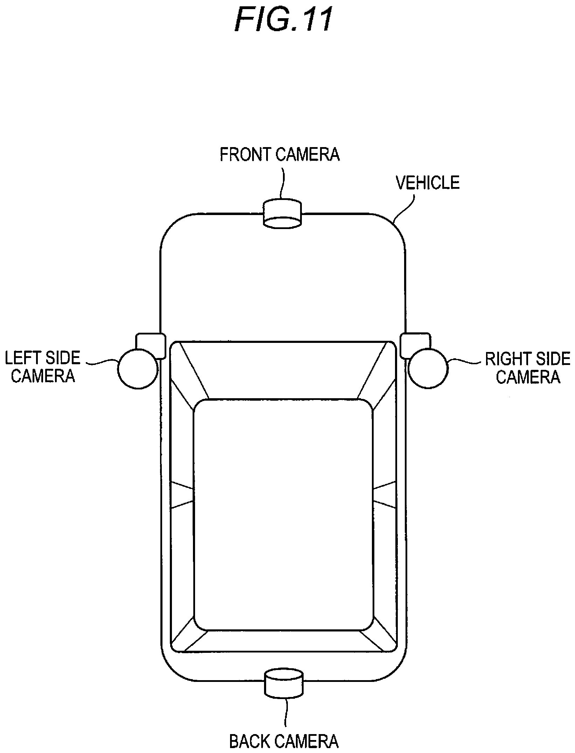

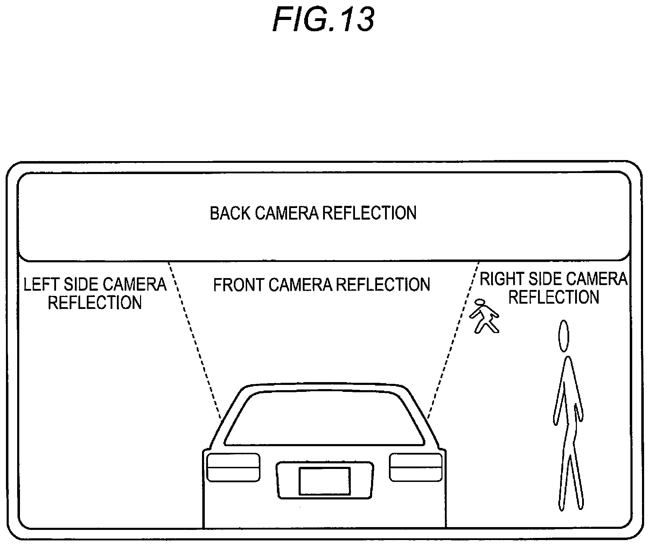

In contrast with the configuration of this embodiment, distortion might occur in a display image due to viewpoint conversion since a center of an imaging range of an imaging device installed in a vehicle does not coincide with a center of an image displayed to a driver or the like in an installation position of a general imaging device in the related art. Fig. 11 illustrates an example of an installation position of an imaging device according to the related art. In the example illustrated in Fig. 11, since a right side camera and a left side camera face downward separately, centerlines of a front camera, the right side camera, and the left side camera installed in the vehicle do not intersect at one point. In a display image illustrated in Fig. 13 to be described below, an imaginary viewpoint is located on the back of the vehicle, but the centerline of each imaging device illustrated in Fig. 11 does not pass through the imaginary viewpoint of the display image.

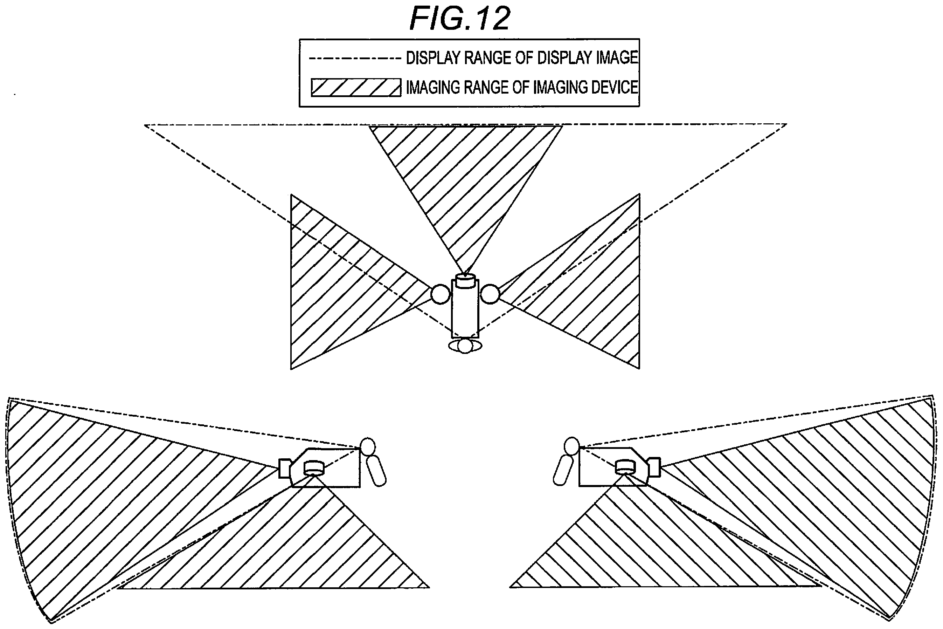

Fig. 12 illustrates an example of imaging ranges of imaging devices and a display range of a display image according to the related art. In an example illustrated in Fig. 12, a center of the imaging range of each imaging device does not coincide with a center of the display range of the display image. In particular, since the right side camera and the left side camera face downward, the imaging range is different from the display range of the display image, and an imaging angle with respect to a subject is also different from an angle between an imaginary development of the display image and the subject. When the display image is generated from images produced by the imaging devices having such an installation position and an installation angle, an information processing device in the related art executes viewpoint conversion processing on each produced image and then combines the produced images.

Fig. 13 illustrates an example of the display image according to the related art. In the example illustrated in Fig. 13, distortion occurs in a shape of a person located near a boundary of each produced image. As in this example, when the center of the imaging range of each imaging device does not coincide with the center of the display range of the display image, distortion might occur in the display image since a degree of viewpoint conversion increases. In addition, the distortion of the display image might make it difficult for the user 3 to grasp a sense of distance from an obstacle or the like and information on the surroundings of the vehicle without a sense of discomfort.

In contrast, the surrounding monitoring device of this embodiment includes a plurality of imaging devices 2a to 2c attached to the vehicle 1 in order to generate the first display image 22 corresponding to the imaginary viewpoint P, and the positions and angles of the plurality of imaging devices 2a to 2c are determined such that the centerlines 20a to 20c of the respective lenses of the plurality of imaging devices 2a to 2c intersect at the imaginary viewpoint P. Therefore, according to the surrounding monitoring device of this embodiment, it is possible to image an image capable of generating the first display image 22 with little distortion.

Furthermore, the surrounding monitoring device of this embodiment synthesizes (or combines) a plurality of images produced by the plurality of imaging devices 2a to 2c to generate the first display image 22 viewed from the imaginary viewpoint P and display the first display image 22 on the display device 12. Therefore, according to the surrounding monitoring device of this embodiment, since a situation in a plurality of directions of the surroundings of the vehicle 1 to be confirmed by the driver (user 3) is displayed on the first display image 22 with little distortion, the situation in the plurality of directions surrounding the vehicle 1 can be displayed on one screen while reducing a sense of discomfort of the user 3 on the display image. For example, the user 3 can easily grasp situations of the front, the right side, and the left side of the vehicle 1 produced by the front camera and the left and right side cameras from the first display image 22.

The image processing unit 101 may perform image recognition processing of recognizing a predetermined object included in image(s) from the produced images of the imaging devices 2a to 2c or the first display image 22 after image processing. The predetermined object may be determined in advance, or may be specified by the user 3 or the like. The display control unit 102 may display a recognition result by means of the image processing unit 101 on the display device 12. For example, the display control unit 102 superimposes and displays a figure or the like illustrating a result of recognizing the predetermined object by the image processing unit 101 on the first display image 22. As described above, the distortion is a little in the first display image 22. Accordingly, according to the surrounding monitoring device of this embodiment, when the recognition result of the predetermined object included in the produced image is displayed, it is possible to reduce a sense of discomfort of the user 3 on display of the recognition result and occurrence of misunderstanding.

In addition to the imaging devices 2a to 2d, the vehicle 1 of this embodiment may include a distance measuring unit such as a sonar (sonar sensor or ultrasonic detector) or the like that emits an ultrasonic wave and captures a reflected wave thereof. The information processing device 100 or another ECU may detect an obstacle or the like based on a detection result of the surroundings of the vehicle 1 by the distance measuring unit and the produced image, and output a warning or the like to the display device 12.

In this embodiment, the surrounding monitoring device includes the imaging devices 2a to 2c, but this disclosure is not limited thereto, and may include the imaging devices 2a to 2d. The position of the imaginary viewpoint P illustrated in Fig. 1 or the like and the installation positions and installation directions of the imaging devices 2a to 2d are an example, and this disclosure is not limited thereto. The related art illustrated in Figs. 11 to 13 is an example, and this disclosure is not limited to the above configuration.

### (Second Embodiment)

In the first embodiment described above, the position of the imaginary viewpoint P and the imaging directions of the imaging devices 2a to 2c are fixed at predetermined positions. In a second embodiment, imaging directions of the imaging devices 2a to 2c are variable along with movement of the imaginary viewpoint P.

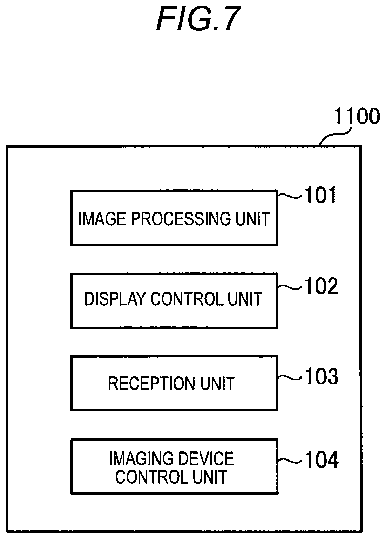

Fig. 7 illustrates an example of functions of an information processing device 1100 according to this embodiment. As illustrated in Fig. 7, the information processing device 1100 includes the image processing unit 101, the display control unit 102, a reception unit 103, and an imaging device control unit 104. In this embodiment, a surrounding monitoring device includes the imaging devices 2a to 2c and the information processing device 1100.

The image processing unit 101 and the display control unit 102 have the same functions as those in the first embodiment.

The reception unit 103 receives an operation of instructing movement of a position of the imaginary viewpoint P by a user 3. For example, the display device 12 includes a touch panel, and the operation of instructing the movement of the position of the imaginary viewpoint P may be input from the touch panel. Further, the reception unit 103 may receive the operation of instructing the movement of the position of the imaginary viewpoint P input from an input device such as another input screen or button. The operation of instructing the movement of the position of the imaginary viewpoint P is not limited to an operation of directly specifying a position of the imaginary viewpoint P after the movement, but may also be a screen display switching operation or the like.

When the imaginary viewpoint P moves, the imaging device control unit 104 moves an orientation of the imaging devices 2a to 2c to a direction where centerlines 20a to 20c of the imaging devices 2a to 2c intersect at the imaginary viewpoint P after the movement. The imaging device control unit 104 controls the orientation of the imaging devices 2a to 2c by, for example, transmitting a control signal to rotate the imaging devices 2a to 2c. The imaging device control unit 104 is an example of a movement control unit in this embodiment.

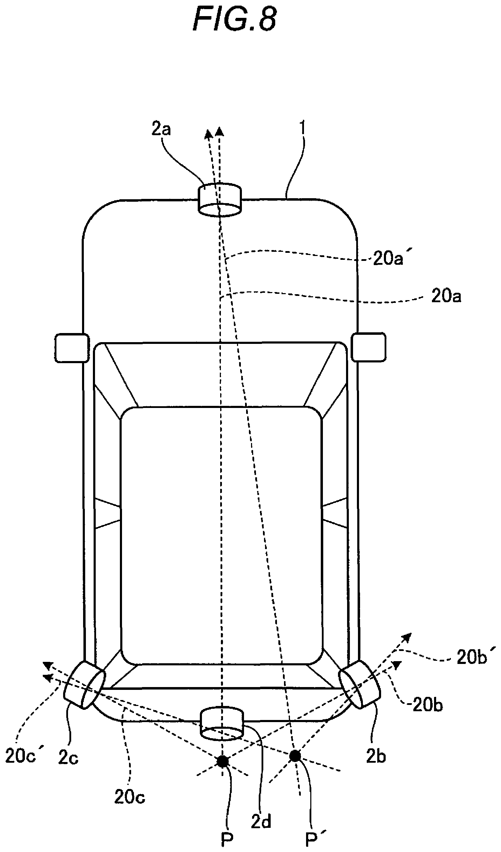

Fig. 8 illustrates an example of movement of the imaginary viewpoint P according to this embodiment. The imaging devices 2a to 2c in this embodiment have a function of changing a direction (orientation) of imaging in addition to the function in the first embodiment. For example, the imaging devices 2a to 2c are attached to rotatable moving mechanisms. For example, when the reception unit 103 receives an operation of moving the imaginary viewpoint P to a position of an imaginary viewpoint P', the imaging device control unit 104 moves (rotates) the orientation of the imaging devices 2a to 2c to a direction where the centerlines 20a to 20c of the imaging devices 2a to 2c intersect at the imaginary viewpoint P' after the movement. Centerlines 20a' to 20c' in Fig. 8 indicate centerlines of lenses of the imaging devices 2a to 2c after the movement.

In this way, when the imaginary viewpoint P moves, the surrounding monitoring device of this embodiment moves the orientation of the imaging devices 2a to 2c to the direction where the centerlines 20a to 20c of the imaging devices 2a to 2c intersect at the imaginary viewpoint P after the movement. Therefore, according to the surrounding monitoring device of this embodiment, in addition to effects of the first embodiment, a display image in which the position of the imaginary viewpoint P is changed can be generated and provided to the user 3.

The movement of the position of the imaginary viewpoint P is not limited to movement due to the operation of the user 3, and may be determined by the information processing device 100 or another ECU loaded on a vehicle 1.

### (Third Embodiment)

In the second embodiment described above, by moving the imaging devices 2a to 2c along with the movement of the imaginary viewpoint P, display images based on a plurality of imaginary viewpoints P can be displayed. In a third embodiment, positions of a plurality of imaginary viewpoints are determined in advance, and a plurality of imaging devices 2 are associated with the imaginary viewpoints respectively.

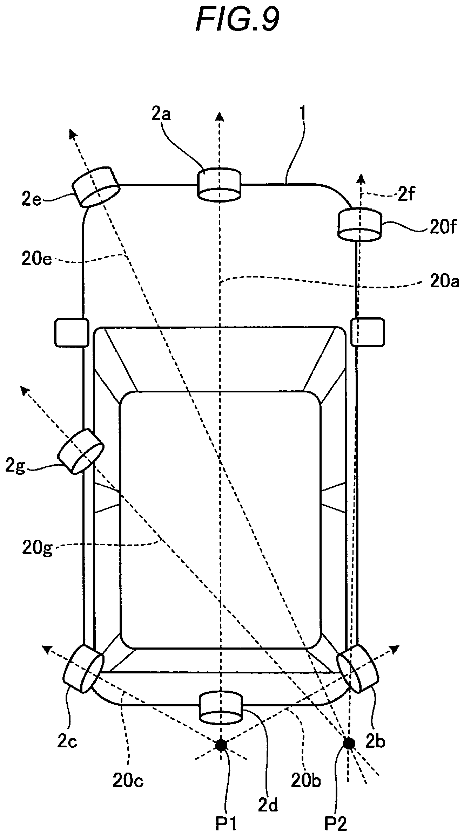

Fig. 9 illustrates an example of installation positions of imaging devices 2a to 2g according to this embodiment. In this embodiment, in order to generate the display images corresponding to a plurality of different imaginary viewpoints P1, P2 respectively, a plurality of imaging devices 2 are associated with the imaginary viewpoints P1, P2 respectively and installed in the vehicle 1. In this embodiment, the imaging devices 2a to 2c are associated with the imaginary point P1, and the imaging devices 2e to 2g are associated with the imaginary viewpoint P2. In more details, installation positions and installation angles of the imaging devices 2a to 2c illustrated in Fig. 9 are determined such that centerlines 20a to 20c of lenses of the imaging devices 2a to 2c intersect at the imaginary viewpoint (first viewpoint) P1. Installation positions and installation angles of the imaging devices 2e to 2g are determined such that centerlines 20e to 20g of lenses of the imaging devices 2e to 2g intersect at the imaginary viewpoint (second viewpoint) P2.

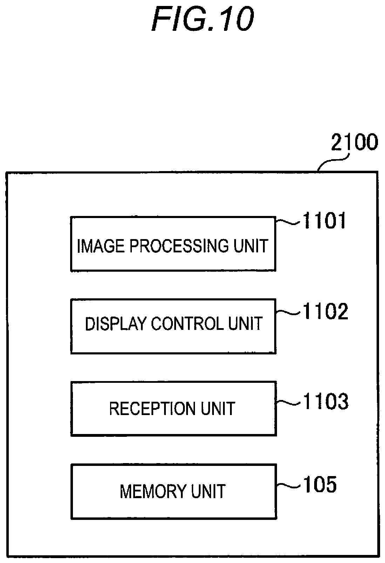

Fig. 10 illustrates an example of functions of an information processing device 2100 according to this embodiment. As illustrated in Fig. 10, the information processing device 2100 according to this embodiment includes an image processing unit 1101, a display control unit 1102, a reception unit 1103, and a memory unit 105.

The memory unit 105 memorizes predetermined positions of a plurality of imaginary viewpoints P and a plurality of imaging devices 2 associated with each imaginary viewpoints P. The memory unit 105 is, for example, a memory device such as an HDD or a flash memory.

The reception unit 1103 receives an operation of selecting either one of the imaginary viewpoints P1, P2 by the user 3.

The image processing unit 1101 has the function in the first embodiment, and executes image processing such as magnification and synthesis (combination) on images produced by the plurality of imaging devices 2 associated with the imaginary viewpoints P selected by the user 3 to generate the display images. For example, when the imaginary viewpoint P1 is selected, the image processing unit 1101 combines (or calculates a synthesis of) the plurality of images produced by the imaging devices 2a to 2c to generate the display image viewed from the imaginary viewpoint P1.

The display control unit 1102 has the function in the first embodiment, and displays the display images generated from the plurality of images produced by the plurality of imaging devices 2 associated with the imaginary viewpoints P selected by the user 3 on a display device 12.

In this way, the surrounding monitoring device of this embodiment includes the plurality of imaging devices 2a to 2c attached to the vehicle 1 in order to generate a display image corresponding to the imaginary viewpoint P1, and the plurality of imaging devices 2e to 2g attached to the vehicle 1 in order to generate another display image corresponding to the imaginary viewpoint P2. It is determined that the centerlines 20a to 20c of the lenses of the plurality of imaging devices 2a to 2c associated with the imaginary viewpoint P1 intersect at the imaginary viewpoint P1, and the centerlines 20e to 20g of the lenses of the plurality of imaging devices 2e to 2g associated with the imaginary viewpoint P2 intersect at the imaginary viewpoint P2. Therefore, according to the surrounding monitoring device of this embodiment, in addition to effects of the first embodiment, even though the imaging device 2 is not moved, it is possible to generate the plurality of display images based on the positions of different imaginary viewpoints P1, P2.

The imaginary viewpoints P may be selected by the information processing device 100 or another ECU. The positions and the number of the imaginary viewpoints P1, P2 and the number of the imaging devices 2 illustrated in Fig. 9 is an example, and this disclosure is not limited thereto. In this embodiment, the reception unit 1103 receives an operation of selecting either one of the imaginary viewpoints P1, P2 by the user 3, but may receive an operation of selecting a plurality of imaginary viewpoints P. The display control unit 1102 may simultaneously display both the display image corresponding to the imaginary viewpoint P1 and the display image corresponding to the imaginary viewpoint P2 on the display device 12.

The information processing device 100, 1100, 2100 includes a control device such as a CPU, a memory device such as a ROM and a RAM, and an external memory device such as an HDD, a flash memory, and a CD drive device, and has a hardware configuration using a general computer. The image processing unit 101, 1101, the display control unit 102, 1102, the reception unit 103, 1103, and the imaging device control unit 104 of the information processing device 100, 1100, 2100 are realized by executing a program stored in the ROM by the CPU. These configurations may be realized with a hardware circuit.

While embodiments disclosed here are exemplified, the above embodiments and modifications are consistently an example, and are not intended to limit a scope of this disclosure. The above embodiments or modifications can be carried out in various other modes, and various omissions, substitutions, combinations, and changes can be performed without departing from the spirit of the disclosure. Configurations and shapes of the respective embodiments and modifications may be partly replaced and carried out.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive.

## Claims

1. A vehicle (1) with a surrounding monitoring device comprising:
a plurality of imaging devices comprising a front camera (2a) which produces images at a front of the vehicle (1), a right side camera (2b) which produces images at a right side of the vehicle (1), a left side camera (2c) which produces images at a left side of the vehicle (1) in order to generate a display image corresponding to one imaginary viewpoint (P) that is a position that is a viewpoint of a user when the user views the display image, wherein centerlines (20a,20b,20c) of respective lenses of the plurality of imaging devices intersect at the viewpoint (P),
a display control unit (102) that displays to a display device (12) a first display image (22) in which the produced images of the plurality of imaging devices (2a,2b,2c) are combined, **characterized in that**
the display control unit (102) further displays to the display device (12) an image (21) illustrating a back surface of the vehicle (1) and a second display image (23) generated by magnification processing or the like from an image produced at the back of the vehicle (1) by a back camera (2d).

2. The vehicle according to claim 1, further comprising:
a movement control unit (104) that moves orientations of the plurality of imaging devices to directions in which the centerlines of the respective lenses of the plurality of imaging devices intersect at the viewpoint after movement when the viewpoint moves.

3. The vehicle according to claim 1, further comprising:
a plurality of imaging devices (2a to 2c) attached to the vehicle in order to generate a display image corresponding to a first viewpoint (P1); and
a plurality of imaging devices (2e to 2g) attached to the vehicle in order to generate another display image corresponding to a second viewpoint (P2), wherein
centerlines (20a to 20c) of respective lenses of the plurality of imaging devices associated with the first viewpoint intersect at the first viewpoint, and
centerlines (20e to 20g) of respective lenses of the plurality of imaging devices associated with the second viewpoint intersect at the second viewpoint.

4. The vehicle according to any one of claims 1 to 3, further comprising:
an image processing unit (101, 1101) that combines a plurality of images produced by the plurality of imaging devices associated with the viewpoint to generate the display image viewed from the viewpoint; and
a display control unit (102, 1102) that causes the generated display image to be displayed on a display device (12).

5. The vehicle according to claim 4, wherein
the image processing unit recognizes a predetermined object from the plurality of images produced by the plurality of imaging devices or the display image, and
the display control unit superimposes a result of recognition of the object by the image processing unit on the display image and causes the result to be displayed on the display device.

## Patentansprüche

1. Fahrzeug (1) mit einer Umgebungsüberwachungsvorrichtung, umfassend:
mehrere Bilderzeugungsvorrichtungen, umfassend eine frontseitige Kamera (2a), die Bilder auf einer Frontseite des Fahrzeugs (1) erzeugt, eine rechtsseitige Kamera (2b), die Bilder auf einer rechten Seite des Fahrzeugs (1) erzeugt, eine linksseitige Kamera (2c), die Bilder auf einer linken Seite des Fahrzeugs (1) erzeugt, um ein Anzeigebild zu generieren, das einem imaginären Betrachtungspunkt (P) entspricht, der eine Position ist, die ein Betrachtungspunkt eines Benutzers ist, wenn der Benutzer das Anzeigebild betrachtet, wobei sich optische Achsen (20a, 20b, 20c) von jeweiligen Objektiven der mehreren Bilderzeugungsvorrichtungen an dem Betrachtungspunkt (P) schneiden,
eine Anzeigesteuereinheit (102), die einer Anzeigevorrichtung (12) ein erstes Anzeigebild (22) anzeigt, in dem die erzeugten Bilder der mehreren Bilderzeugungsvorrichtungen (2a, 2b, 2c) kombiniert werden, **dadurch gekennzeichnet, dass**
die Anzeigesteuereinheit (102) der Anzeigevorrichtung (12) ferner ein Bild (21) anzeigt, das eine rückseitige Oberfläche des Fahrzeugs (1) darstellt, und ein zweites Anzeigebild (23) anzeigt, das durch Vergrößerungsverarbeitung oder dergleichen aus einem Bild generiert wird, welches an der Rückseite des Fahrzeugs (1) durch eine rückseitige Kamera (2d) erzeugt wird.

2. Fahrzeug nach Anspruch 1, ferner umfassend:
eine Bewegungssteuereinheit (104), die Ausrichtungen der mehreren Bilderzeugungsvorrichtungen zu Richtungen bewegt, in denen sich nach Bewegung die optischen Achsen der jeweiligen Objektive der mehreren Bilderzeugungsvorrichtungen an dem Betrachtungspunkt schneiden, wenn sich der Betrachtungspunkt bewegt.

3. Fahrzeug nach Anspruch 1, ferner umfassend:
mehrere Bilderzeugungsvorrichtungen (2a bis 2c), die an dem Fahrzeug befestigt sind, um ein Anzeigebild zu generieren, das einem ersten Betrachtungspunkt (P1) entspricht, und
mehrere Bilderzeugungsvorrichtungen (2e bis 2g), die an dem Fahrzeug befestigt sind, um ein anderes Anzeigebild zu generieren, das einem zweiten Betrachtungspunkt (P2) entspricht, wobei
sich optische Achsen (20a bis 20c) von jeweiligen Objektiven der mehreren Bilderzeugungsvorrichtungen, die dem ersten Betrachtungspunkt zugeordnet sind, an dem ersten Betrachtungspunkt schneiden, und
sich optische Achsen (20e bis 20g) von jeweiligen Objektiven der mehreren Bilderzeugungsvorrichtungen, die dem zweiten Betrachtungspunkt zugeordnet sind, an dem zweiten Betrachtungspunkt schneiden.

4. Fahrzeug nach einem beliebigen der Ansprüche 1 bis 3, ferner umfassend:
eine Bildverarbeitungseinheit (101, 1101), die mehrere Bilder, welche durch die mehreren Bilderzeugungsvorrichtungen erzeugt werden, die dem Betrachtungspunkt zugeordnet sind, kombiniert, um das Anzeigebild, das von dem Betrachtungspunkt betrachtet wird, zu generieren, und
eine Bildsteuereinheit (102, 1102), die bewirkt, dass das generierte Anzeigebild auf einer Anzeigevorrichtung (12) angezeigt wird.

5. Fahrzeug nach Anspruch 4, wobei
die Bildverarbeitungseinheit aus den mehreren Bildern, die durch die mehreren Bilderzeugungsvorrichtungen erzeugt werden, oder dem Anzeigebild ein vorbestimmtes Objekt erkennt und
die Anzeigesteuereinheit ein Resultat der Erkennung des Objekts durch die Bildverarbeitungseinheit über das Anzeigebild legt und bewirkt, dass das Resultat auf der Anzeigevorrichtung angezeigt wird.

## Revendications

1. Véhicule (1) avec un dispositif de surveillance des alentours comprenant :
une pluralité de dispositifs d'imagerie comprenant une caméra avant (2a) qui produit des images sur un avant du véhicule (1), une caméra de côté droit (2b) qui produit des images sur un côté droit du véhicule (1), une caméra de côté gauche (2c) qui produit des images sur un côté gauche du véhicule (1) afin de générer une image d'affichage correspondant à un point de vue (P) imaginaire qui est une position d'un utilisateur lorsque l'utilisateur visualise l'image d'affichage, dans lequel des axes optiques (20a, 20b, 20c) de lentilles respectives de la pluralité de dispositifs d'imagerie se croisent au niveau du point de vue (P),
une unité de commande d'affichage (102) qui affiche sur un dispositif d'affichage (12) une première image d'affichage (22) dans laquelle les images produites de la pluralité de dispositifs d'imagerie (2a, 2b, 2c) sont combinées, **caractérisé en ce que**
l'unité de commande d'affichage (102) affiche en outre sur le dispositif d'affichage (12) une image (21) illustrant une surface arrière du véhicule (1) et une seconde image d'affichage (23) générée par un traitement de grossissement ou analogue depuis une image produite sur l'arrière du véhicule (1) par une caméra arrière (2d).

2. Véhicule selon la revendication 1, comprenant en outre :
une unité de commande de mouvement (104) qui déplace des orientations de la pluralité de dispositifs d'imagerie vers des directions dans lesquelles les axes optiques des lentilles respectives de la pluralité de dispositifs d'imagerie se croisent au niveau du point de vue après un mouvement lorsque le point de vue se déplace.

3. Véhicule selon la revendication 1, comprenant en outre :
une pluralité de dispositifs d'imagerie (2a à 2c) fixés au véhicule afin de générer une image d'affichage correspondant à un premier point de vue (P1) ; et
une pluralité de dispositifs d'imagerie (2e à 2g) fixés au véhicule afin de générer une autre image d'affichage correspondant à un second point de vue (P2), dans lequel
des axes optiques (20a à 20c) de lentilles respectives de la pluralité de dispositifs d'imagerie associés au premier point de vue se croisent au niveau du premier point de vue, et
des axes optiques (20e à 20g) de lentilles respectives de la pluralité de dispositifs d'imagerie associés au second point de vue se croisent au niveau du second point de vue.

4. Véhicule selon l'une quelconque des revendications 1 à 3, comprenant en outre :
une unité de traitement d'image (101, 1101) qui combine une pluralité d'images produites par la pluralité de dispositifs d'imagerie associés au point de vue pour générer l'image d'affichage visualisée depuis le point de vue ; et
une unité de commande d'affichage (102, 1102) qui provoque l'affichage de l'image d'affichage générée sur un dispositif d'affichage (12).

5. Véhicule selon la revendication 4, dans lequel
l'unité de traitement d'image reconnaît un objet prédéterminé à partir de la pluralité d'images produites par la pluralité de dispositifs d'imagerie ou l'image d'affichage, et
l'unité de commande d'affichage superpose un résultat de reconnaissance de l'objet par l'unité de traitement d'image sur l'image d'affichage et provoque l'affichage du résultat sur le dispositif d'affichage.
